(19) Europäisches Patentamt
European Patent Office
Office européen des brevets

(11) **EP 3 632 524 A1**

(12) **EUROPEAN PATENT APPLICATION**
published in accordance with Art. 153(4) EPC

(43) Date of publication:
**08.04.2020 Bulletin 2020/15**

(51) Int Cl.:
**B01D 39/16** (2006.01)  **D04H 3/011** (2012.01)
**D04H 3/147** (2012.01)

(21) Application number: **18809935.2**

(22) Date of filing: **07.05.2018**

(86) International application number:
**PCT/JP2018/017617**

(87) International publication number:
**WO 2018/221122 (06.12.2018 Gazette 2018/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.05.2017  JP 2017106243**

(71) Applicant: **Toray Industries, Inc.**
**Tokyo 103-8666 (JP)**

(72) Inventors:
- **MIZOGAMI, Shinobu**
  **Otsu-shi**
  **Shiga 520-8558 (JP)**
- **NAKANO, Yohei**
  **Otsu-shi**
  **Shiga 520-8558 (JP)**
- **SHIMADA, Daiki**
  **Otsu-shi**
  **Shiga 520-8558 (JP)**

(74) Representative: **Kador & Partner PartG mbB**
**Corneliusstraße 15**
**80469 München (DE)**

(54) **SPUNBONDED NONWOVEN FABRIC FOR FILTER AND METHOD FOR PRODUCING SAME**

(57)    The spunbond non-woven fabric for a filter of the present invention comprises a composite polyester fiber containing a low melting point polyester arranged in the vicinity of a high melting point polyester, the low melting point polyester having a melting point which is 10 to 140°C lower than the melting point of the high melting point polyester, the spunbond non-woven fabric having a surface layer and a back layer, the composite polyester fiber having a single fiber fineness of not less than 1 dtex and less than 3 dtex at the surface layer and said composite polyester fiber having a single fiber fineness of not less than 3 dtex and not more than 5 dtex at the back layer, and the spunbond non-woven fabric having a basis weight of 130 to 300 g/m².

A spunbond non-woven fabric for a filter having high rigidity and air permeability as well as excellent dust brush-off performance is provided.

EP 3 632 524 A1

**Description**

TECHNICAL FIELD

The present invention relates to a spunbond non-woven fabric for a filter, for use as a pleated filter or as a pleated filter base material to be laminated with a filter material such as a polytetrafluoroethylene (PTFE) membrane or a nanofiber, and a method for producing the spunbond non-woven fabric for a filter.

BACKGROUND ART

Conventionally, in work environments generating dust, dust collectors have been used for the purpose of removal and collection of the dust. The filters for the dust collectors are known to be used in pleated shapes. Because of such pleated shapes of the filters, the dust collectors can have remarkably increased filtration areas, and can therefore achieve reduction of the pressure drop and a high collection efficiency. For the filters of the dust collectors, the so-called backwashing is commonly employed, wherein compressed air or the like is injected from the inside when the pressure drop reached a certain level, thereby brushing off the dust attached to the surface of the filter material.
Thus, the non-woven fabric to be used as the pleated filter needs to have the following important properties: high rigidity for allowing the pleating, air permeability for reducing the pressure drop, and compactness for increasing the brush-off performance by allowing filtration of dust through the surface layer. In view of this, a variety of woven fabrics and non-woven fabrics have so far been proposed.

PRIOR ART DOCUMENTS

[Patent Documents]

The use of a long-fiber non-woven fabric prepared by thermal bonding using an embossing roll as a pleated filter has been proposed (see Patent Document 1).
On the other hand, the so-called air-through method, wherein hot air is passed through a non-woven fabric to allow thermal bonding (see Patent Document 2), has been proposed as a thermal bonding method which is different from the use of an embossing roll.
In addition, a method in which the air-through is carried out followed by thermal bonding using a calender roll has been also proposed so far (see Examples in Patent Document 3).
Furthermore, the use of a denier-mixed, long-fiber non-woven fabric prepared by heat-press using an embossing roll as a pleated filter has been proposed (see Patent Document 4).
In another method that has been proposed so far, 3 to 5 denier-mixed, non-woven fabrics of mixed fibers, made of polypropylene spun by melt blowing, are stacked and subjected to the air-through, followed by thermal bonding using a calender roll (see Patent Document 5).

> Patent Document 1: JP 3534043 B
> Patent Document 2: JP H7-157960 A
> Patent Document 3: JP 2009-6318 A
> Patent Document 4: JP H11-192406 A
> Patent Document 5: JP H11-90135 A

SUMMARY OF THE INVENTION

PROBLEMS TO BE SOLVED BY THE INVENTION

However, if thermal bonding is carried out using an embossing roll as proposed in Patent Document 1, the thermally bonded portion becomes film-like, leading to elimination of air permeability, so that the pressure drop increases. Moreover, regarding the dust brush-off performance, accumulation of dust easily occurs in the thermally bonded portion having no air permeability, leading to a short product life, which is problematic.
In cases where the air-through method as proposed in Patent Document 2 is used, there is no problem of deterioration of air permeability since a thermally bonded portion is absent unlike cases where an embossing roll is used. However, the production method easily allows entrance of dust into the inside due to poor compactness, so that brushing off of the dust is impossible by backwashing, leading to a short product life, which is problematic.
In the Examples of Patent Document 3, the heat treatment is carried out with hot air at a temperature much higher than the melting point of the fibers constituting the non-woven fabric. Therefore, the whole fibers melt to become a film-like sheet, which has poor air permeability and is therefore not preferred as a pleated filter.

In Patent Document 4, since the mesh is made of filaments of not more than 1 denier (1.111 decitex), high collection performance can be obtained, but there is a problem of the elimination of air permeability and the increase in pressure drop, leading to a short product life.

In Patent Document 5, considering the fibers constituting the non-woven fabric, the strength is poor, the air permeability is low, and the pressure drop increases, which is not preferred as a pleated filter.

Accordingly, in view of the above problem, an object of the present invention is to provide a spunbond non-woven fabric for a filter having high rigidity and air permeability in a thick fineness layer as well as excellent dust brush-off performance in a thin fineness layer.

Another object of the present invention is to provide a method of efficiently and stably producing a spunbond non-woven fabric for a filter having the above performance.

MEANS FOR SOLVING THE PROBLEMS

In order to solve the above problem, the spunbond non-woven fabric for a filter of the present invention has the following structure. That is,
a spunbond non-woven fabric for a filter comprising a composite polyester fiber containing a low melting point polyester arranged in the vicinity of a high melting point polyester, the low melting point polyester having a melting point which is 10 to 140°C lower than the melting point of the high melting point polyester, the spunbond non-woven fabric having a surface layer and a back layer, the composite polyester fiber having a single fiber fineness of not less than 1 dtex and less than 3 dtex at the surface layer and a single fiber fineness of not less than 3 dtex and not more than 5 dtex at the back layer, and the spunbond non-woven fabric having a basis weight of 130 to 300 g/m$^2$.

Furthermore, the method of producing a spunbond non-woven fabric for a filter of the present invention has the following structure. That is,
a method of producing a spunbond non-woven fabric for a filter, comprising sequentially carrying out the following steps (a) to (d):

(a) a step of spinning, from a spinneret, a composite polyester fiber containing a low melting point polyester arranged in the vicinity of a high melting point polyester, the low melting point polyester having a melting point which is 10 to 140°C lower than the melting point of the high melting point polyester;
(b) a step of subjecting the spun composite polyester fiber to stretch by suction flow with high-speed suction gas, and then capturing the fiber on a moving net conveyor, to obtain a fiber web containing a composite polyester fiber having a single fiber fineness of not less than 1 dtex and less than 3 dtex at the surface layer and a single fiber fineness of not less than 3 dtex and not more than 5 dtex at the back layer;
(c) a step of passing hot air through the obtained fiber web, the hot air having a temperature higher than the melting point of the low melting point polyester and lower than the melting point of the high melting point polyester, to perform air-through thermal bonding; and
(d) a step of sandwiching the air-through-thermal-bonded fiber web between a pair of flat rolls or two belt conveyors, and performing heat treatment at a temperature which is 5 to 75°C lower than the melting point of the low melting point polyester, to obtain a spunbond non-woven fabric having a basis weight of 130 to 300 g/m$^2$.

In a preferred mode of the spunbond non-woven fabric for a filter of the present invention, the composite polyester fiber has a composite form of a core-sheath type containing the high melting point polyester as a core component and the low melting point polyester as a sheath component, wherein the core-sheath component mass ratio between the core component and the sheath component is 90:10 to 60:40.

According to a preferred mode of the spunbond non-woven fabric for a filter of the present invention, no partially observed concave region having a depth of not less than 0.1 mm is formed on at least one side of the spunbond non-woven fabric for a filter.

According to a preferred mode of the spunbond non-woven fabric for a filter of the present invention, the high melting point polyester is a polyethylene terephthalate, and the low melting point polyester is a copolymerized polyethylene terephthalate.

In a preferred mode of the method of producing a spunbond non-woven fabric for a filter of the present invention, the composite polyester fiber has a composite form of a core-sheath type containing the high melting point polyester as a core component and the low melting point polyester as a sheath component, wherein the core-sheath component mass ratio between the core component and the sheath component is 90:10 to 60:40.

According to a preferred mode of the method of producing a spunbond non-woven fabric for a filter of the present invention, the high melting point polyester is a polyethylene terephthalate, and the low melting point polyester is a copolymerized polyethylene terephthalate.

EFFECT OF THE INVENTION

By present invention, a spunbond non-woven fabric for a filter having high rigidity and air permeability in a thick fineness layer as well as excellent dust brush-off performance in a thin fineness layer can be obtained. Accordingly, the spunbond non-woven fabric for a filter of the present invention can be suitably used as a pleated filter or as a pleated filter base material to be laminated with a filter material such as a PTFE membrane or a nanofiber.

By the method of producing a spunbond non-woven fabric for a filter of the present invention, a spunbond non-woven fabric for a filter having the above performance can be efficiently and stably produced.

BRIEF DESCRIPTION OF THE DRAWINGS

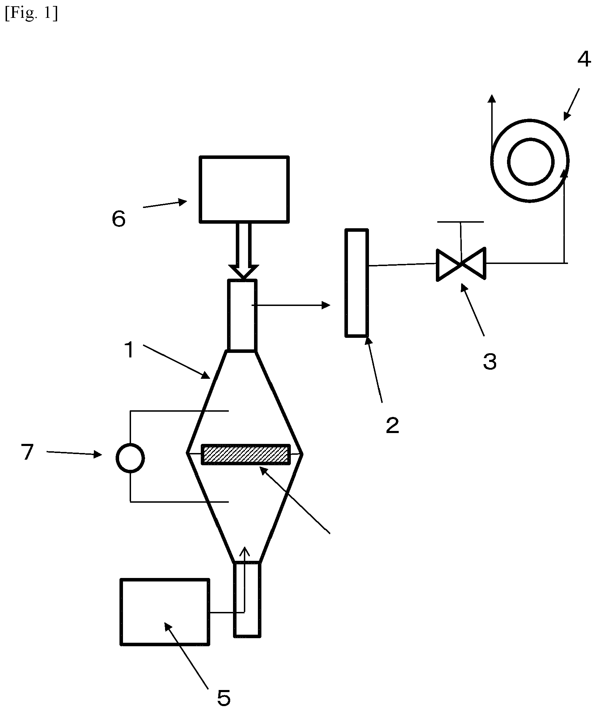

Fig. 1 is a schematic side view for illustrating a device for evaluation of the dust brush-off performance.

MODE FOR CARRYING OUT THE INVENTION

The spunbond non-woven fabric for a filter of the present invention is described below in detail.

The spunbond non-woven fabric for a filter of the present invention comprises a composite polyester fiber containing a low melting point polyester arranged in the vicinity of a high melting point polyester, the low melting point polyester having a melting point which is 10 to 140°C lower than the melting point of the high melting point polyester, the spunbond non-woven fabric having a surface layer and a back layer, the composite polyester fiber having a single fiber fineness of not less than 1 dtex and less than 3 dtex at the surface layer and a single fiber fineness of not less than 3 dtex and not more than 5 dtex at the back layer, and the spunbond non-woven fabric having a basis weight of 130 to 300 $g/m^2$.

In the present invention, when the spunbond non-woven fabric for a filter is used as a filter, the surface layer refers to the side for dust collection, and the back layer refers to the side opposite to the surface layer.

The spunbond non-woven fabric for a filter of the present invention preferably has an apparent density of 0.25 to 0.40 $g/cm^3$, an air permeability per basis weight of 0.05 to 0.50 $(cm^3/cm^2 \cdot sec)/(g/m^2)$, and a bending resistance per basis weight, in at least one of the machine direction (MD) and the transverse direction (TD), of 0.08 to 0.32 $(mN)/(g/m^2)$.

As the material resin of the synthetic fiber constituting the spunbond non-woven fabric for a filter of the present invention, a polyester is used. A polyester is a high molecular weight polymer containing as monomers an acid component and an alcohol component. Examples of the acid component that may be used include aromatic carboxylic acids such as terephthalic acid, isophthalic acid, and phthalic acid; aliphatic dicarboxylic acids such as adipic acid and sebacic acid; and alicyclic dicarboxylic acids such as cyclohexanecarboxylic acid. Examples of the alcohol component that may be used include ethylene glycol, diethylene glycol, and polyethylene glycol.

Examples of the polyester include polyethylene terephthalate (PET), polybutylene terephthalate (PBT), polytrimethylene terephthalate (PTT), polyethylene naphthalate, polylactic acid, and polybutylene succinate. As the high melting point polyester, PET, which has a high melting point and excellent heat resistance as well as excellent rigidity, is most preferably used.

Examples of the combination of the high melting point polyester and the low melting point polyester (high melting point polyester/low melting point polyester) used in the present invention include the combinations of PET/PBT, PET/PTT, PET/polylactic acid, and PET/copolymerized PET. Among these, the combination of PET/copolymerized PET is preferably used since it has excellent spinnability. As the copolymerization component in the copolymerized PET, isophthalic acid-copolymerized PET is preferably used since it has especially excellent spinnability.

As long as the effect of the present invention is not deteriorated, a nucleating agent, matting agent, pigment, fungicide, antibacterial agent, flame retardant, hydrophilic agent, and/or the like may be added to the polyester materials. In particular, metal oxides such as titanium oxide effectively improve the spinnability by reduction of the surface friction of fibers to prevent fusion of the fibers, and improve adhesiveness of a non-woven fabric since they increase thermal conductivity in heat press molding of the non-woven fabric using a heat roller. Aliphatic bisamides such as ethylene-bis-stearic acid amide, and/or alkyl-substituted aliphatic monoamides effectively increase the mold-releasing property between the heat roller and the non-woven fabric web to improve the conveying performance.

The polyester fiber constituting the spunbond non-woven fabric for a filter of the present invention is a composite polyester fiber containing a low melting point polyester arranged in the vicinity of a high melting point polyester, the low melting point polyester having a melting point which is 10 to 140°C lower than the melting point of the high melting point polyester. By the arrangement, in the vicinity of the high melting point polyester, of the low melting point polyester having a melting point which is 10 to 140°C lower than the melting point of the high melting point polyester, the composite polyester fibers (filaments) constituting the spunbond non-woven fabric can be bonded to each other strongly in the process of forming the spunbond non-woven fabric by thermal bonding. Therefore, the spunbond non-woven fabric for a filter can have excellent mechanical strength, and can be sufficiently resistant to repeated backwashing.

On the other hand, although there is also a method in which a high melting point polyester and a low melting point polyester are prepared into a mixed fiber, the mixed-fiber method does not easily allow uniform thermal bonding, and therefore, for example, thermal bonding is weak in portions where high melting point polyester fibers are densely present, so that the mechanical strength and the rigidity become poor, which is not suitable as a pleated filter. Further, even in cases where the same composite polyester fibers are used, if the spunbond non-woven fabric is a non-woven fabric composed of staple fibers rather than filaments (long fibers), the composite polyester fibers are constituted by discontinuous fibers, so that the rigidity and the mechanical strength are poor, which is not preferred as a pleated filter. Although there is also a method in which a low melting point component is applied as an adhesive component, rather than as a composite component, by immersion, spraying, or the like, the method does not easily allow uniform application to the surface layer or in the thickness direction, so that the mechanical strength and the rigidity are poor, which is not preferred as a pleated filter.

In the present invention, the melting point of the low melting point polyester needs to be lower than the melting point of the high melting point polyester by not less than 10°C in order to obtain a desired thermal adhesiveness. If the melting point of the low melting point polyester is lower than the melting point of the high melting point polyester by more than 140°C, a decrease in the heat resistance cannot be suppressed. The difference in the melting point between the high melting point polyester and the low melting point polyester used in the present invention is more preferably within the range of 20 to 120°C, still more preferably within the range of 30 to 100°C.

The melting point of the high melting point polyester is preferably within the range of 200 to 320°C. For obtaining a filter having excellent heat resistance, the melting point of the high melting point polyester is preferably not less than 200°C, more preferably not less than 210°C, still more preferably not less than 220°C. On the other hand, for suppressing a decrease in the productivity due to consumption of a large amount of thermal energy for the melting in the production of the non-woven fabric, the melting point of the high melting point polyester is preferably not more than 320°C, more preferably not more than 300°C, still more preferably not more than 280°C.

The melting point of the low melting point polyester is preferably within the range of 160 to 250°C. For achieving excellent shape stability even after passing through a heating process in the production of the pleated filter, such as heat setting in the pleating, the melting point of the low melting point polyester is preferably not less than 160°C, more preferably not less than 170°C, still more preferably not less than 180°C. On the other hand, for obtaining a filter having excellent thermal adhesiveness during the production of the non-woven fabric, and having excellent mechanical strength, the melting point of the low melting point polyester is preferably not more than 250°C, more preferably not more than 240°C.

The content ratio between the high melting point polyester and the low melting point polyester is preferably within the range of 90:10 to 60:40, more preferably within the range of 85:15 to 70:30 in terms of the mass ratio. In cases where the high melting point polyester is contained at 60 to 90% by mass, a spunbond non-woven fabric which is excellent in rigidity and heat resistance can be obtained. On the other hand, in cases where the low melting point polyester is contained at 10 to 40% by mass, the composite polyester fibers (filaments) constituting the spunbond non-woven fabric can be bonded to each other strongly in the process of forming and using the spunbond non-woven fabric by thermal bonding, so that the spunbond non-woven fabric can have excellent mechanical strength and sufficient resistance to repeated backwashing.

Examples of the composite form of the composite polyester fiber include the concentric core-sheath type, the eccentric core-sheath type, and the sea-island type. Among these, the composite form is preferably of the concentric core-sheath type from the viewpoint of achieving uniform and strong adhesion between the filaments. Examples of the cross-sectional shape of the filament (single fiber) include shapes such as circular cross-sections, flat cross-sections, polygonal cross-sections, multi-lobed cross-sections, and hollow cross-sections. Among these, in a preferred mode, the cross-sectional shape of the filament (single fiber) is a circular cross-sectional shape.

In the spunbond non-woven fabric for a filter of the present invention, preferably, no partially observed concave region having a depth of not less than 0.1 mm is formed on at least one side. More preferably, no partially observed concave region having a depth of not less than 0.1 mm is formed on either side. Partially observed concave regions are formed when fibers are densely packed in the thickness direction by, for example, use of an embossing roll or partial heat press by ultrasonic bonding. The partially observed concave region having a depth of not less than 0.1 mm means a region where, when the surface of the spunbond non-woven fabric is viewed from the perpendicular direction, and when the surface shape is measured along a straight line with a length of 3 to 10 mm, a concave portion having a depth of not less than 0.1 mm in the thickness direction is present continuously for a length of not less than 0.2 mm in the surface direction, wherein the depth is measured using as a reference point (0 mm depth) the highest portion in the surface shape excluding a portion(s) where a single yarn(s) is/are protruding due to fluffing and/or the like.

This partially observed concave region can be measured, for example, by measuring the surface shape using a non-contact shape measuring device such as a shape analysis laser microscope or a 3D shape measuring instrument, or by measuring the thickness of the cross-section of the spunbond non-woven fabric using a scanning electron microscope. By the absence of such a partially observed concave region, the dust brush-off performance can be improved to increase the product life of the filter.

The spunbond non-woven fabric wherein no partially observed concave region is formed can be obtained by passing hot air having a temperature higher than the melting point of a low melting point polyester and lower than the melting point of a high melting point polyester through a fiber web composed of a composite polyester fiber containing the low melting point polyester arranged in the vicinity of the high melting point polyester, the low melting point polyester having a melting point which is 10 to 140°C lower than the melting point of the high melting point polyester, to allow air-through thermal bonding, and then sandwiching the fiber web between a pair of flat rolls or two belt conveyors, followed by performing heat treatment at a temperature which is 5 to 75°C lower than the melting point of the low melting point polyester.

In the present invention, the single fiber fineness of the composite polyester fiber constituting the spunbond non-woven fabric for a filter is not less than 1 dtex and less than 3 dtex at the surface layer, and not less than 3 dtex and not more than 5 dtex at the back layer. In cases where the single fiber fineness of the composite polyester fiber of the surface layer is less than 1 dtex, the air permeability of the spunbond non-woven fabric is low, which tends to result in a high pressure drop. In addition, for example, yarn breakage is likely to occur during the production, leading to poor production stability. In cases where the single fiber fineness of the composite polyester fiber of the surface layer portion is not less than 3 dtex, dust tends to enter the inside and accumulates due to insufficient compactness, which is problematic. Moreover, in cases where the single fiber fineness of the composite polyester fiber of the back layer portion is less than 3 dtex, the pressure drop tends to be high, leading to poor dust brush-off performance and a short product life. In cases where the single fiber fineness of the composite polyester fiber of the back layer is more than 5 dtex, uniformity of the spunbond non-woven fabric is low, which tends to result in a low capture performance. Furthermore, for example, insufficient cooling of filaments is likely to cause yarn breakage during the production, leading to poor production stability.

The single fiber fineness of the composite polyester fiber of the surface layer is more preferably within the range of 1.2 dtex to 2.9 dtex. In cases where the single fiber fineness is not less than 1.2 dtex and not more than 2.9 dtex, the non-woven fabric can have a compact surface, and filtration of dust through the surface layer can be more easily carried out. The single fiber fineness of the back layer is more preferably within the range of 3.0 dtex to 4.5 dtex. In cases where the single fiber fineness is not less than 3.0 dtex and not more than 4.5 dtex, the spunbond non-woven fabric can have better air permeability and lower pressure drop. Thus, by stacking composite polyester fibers of a thin fineness at the surface layer and composite polyester fibers of a thick fineness at the back layer, the dust collection performance and the dust brush-off performance can be improved, so that the product life of the filter can be increased.

The single fiber fineness herein means a value calculated as follows. That is, 10 small sample pieces are randomly collected from a spunbond non-woven fabric, and their images are taken using a scanning electron microscope at magnification selected from the range of ×500 to ×3000. Ten fibers from each sample, that is, a total of 100 fibers, are arbitrarily selected, and the thickness of each fiber is measured. Each fiber is regarded as having a circular cross-section, and its thickness is defined as the fiber diameter. The average value is rounded to the nearest integer, and then the fineness is calculated based on the resulting fiber diameter and the polymer density, followed by rounding the calculated fineness to the nearest integer.

The basis weight of the spunbond non-woven fabric for a filter in the present invention is within the range of 130 to 300 g/m$^2$. In cases where the basis weight is less than 130 g/m$^2$, the rigidity required for the pleat cannot be obtained. In cases where the basis weight is more than 300 g/m$^2$, an increase in the pressure drop cannot be suppressed, and the spunbond non-woven fabric is insufficient from the viewpoint of the cost as well. The basis weight is more preferably within the range of 130 to 260 g/m$^2$, still more preferably within the range of 150 to 240 g/m$^2$.

The basis weight herein can be calculated by collecting three samples each having a size of 50 cm × 50 cm, measuring the mass of each sample, converting the average of the obtained values to a value per unit area, and then rounding the resulting value to the nearest integer.

The thickness of the spunbond non-woven fabric for a filter in the present invention is preferably 0.35 to 1.2 mm, more preferably 0.38 to 1.0 mm, still more preferably 0.40 to 0.8 mm. In cases where the thickness is not less than 0.35 mm, the rigidity can be increased, and the non-woven fabric can be suitable for use as a filter. In cases where the thickness is not more than 1.2 mm, the non-woven fabric can have excellent handling performance and processability as a filter.

The apparent density of the spunbond non-woven fabric for a filter in the present invention is preferably 0.25 to 0.40 g/cm$^3$. In cases where the apparent density is 0.25 to 0.40 g/cm$^3$, the spunbond non-woven fabric can have a compact structure, so that dust is less likely to enter the inside, and an excellent dust brush-off performance can be achieved. The apparent density is more preferably within the range of 0.27 to 0.40 g/cm$^3$, still more preferably within the range of 0.30 to 0.40 g/cm$^3$. The apparent density herein is calculated according to the following equation.

$$\bullet \text{ Apparent density } (g/cm^3) = \text{basis weight } (g/m^2) \text{ / thickness } (mm) \text{ / } 1000$$

The air permeability per basis weight of the spunbond non-woven fabric for a filter in the present invention is preferably 0.05 to 0.50 (($cm^3/cm^2 \cdot sec$)/($g/m^2$)). In cases where the air permeability per basis weight is not less than 0.05 (($cm^3/cm^2 \cdot sec$)/($g/m^2$)), the increase in pressure drop can be suppressed. In cases where the air permeability per basis weight is not more than 0.50 (($cm^3/cm^2 \cdot sec$)/($g/m^2$)), dust is less likely to accumulate in the inside, so that the dust brush-off performance is good. The air permeability per basis weight is preferably 0.10 to 0.48 (($cm^3/cm^2 \cdot sec$)/($g/m^2$)). The air permeability per basis weight is more preferably 0.15 to 0.45 (($cm^3/cm^2 \cdot sec$)/($g/m^2$)).

The air permeability per basis weight herein is calculated according to the following equation.

$$\text{Air permeability per basis weight } ((cm^3/cm^2 \cdot sec)/(g/m^2)) = \text{air permeability}$$

$$(cm^3/cm^2 \cdot sec) / \text{basis weight } (g/m^2).$$

The bending resistance per basis weight of the spunbond non-woven fabric for a filter in the present invention in at least one of the machine direction (MD) and the transverse direction (TD) is preferably 0.08 to 0.32 (($mN$)/($g/m^2$)). In cases where the bending resistance per basis weight is not less than 0.08 (($mN$)/($g/m^2$)), the pleating performance is excellent, and the spunbond non-woven fabric for a filter is unlikely to undergo deformation during backwashing. In cases where the bending resistance per basis weight is not more than 0.32 ($mN$)/($g/m^2$), folds are unlikely to be formed when the spunbond non-woven fabric for a filter is wound up, leading to a high appearance quality.

The bending resistance per basis weight herein is calculated according to the following equation.

$$\text{Bending resistance per basis weight } ((mN)/(g/m^2)) = \text{bending resistance } (mN)$$

$$/ \text{ basis weight } (g/m^2).$$

Here, in the present invention, the machine direction (MD) means the direction in which the sheet is conveyed during the production of the spunbond non-woven fabric, that is, the winding direction of the roll of the non-woven fabric. The transverse direction (TD) means the direction perpendicular to the direction in which the sheet is conveyed during the production of the spunbond non-woven fabric, that is, the width direction of the roll of the non-woven fabric. The spunbond non-woven fabric of the present invention preferably has a bending resistance per basis weight of 0.08 to 0.32 (($mN$)/($g/m^2$)) in at least one of the machine direction (MD) and the transverse direction (TD). The machine direction (MD) and the transverse direction (TD) of the sheet do not need to be distinguished from each other as long as measurement is possible for both directions.

The tensile strength in the machine direction (MD) per basis weight of the spunbond non-woven fabric for a filter of the present invention (which may be hereinafter referred to as the machine direction tensile strength per basis weight) is preferably not less than 3.2 ($N/5$ cm)/($g/m^2$), more preferably not less than 3.5 ($N/5$ cm)/($g/m^2$), still more preferably not less than 3.8 ($N/5$ cm)/($g/m^2$). The tensile strength in the transverse direction (TD) per basis weight (which may be hereinafter referred to as the transverse direction tensile strength per basis weight) is preferably not less than 2.0 ($N/5$ cm)/($g/m^2$), more preferably not less than 2.3 ($N/5$ cm)/($g/m^2$), still more preferably not less than 2.5 ($N/5$ cm)/($g/m^2$).

By setting the machine direction tensile strength and the transverse direction tensile strength as described above, a mechanical strength sufficient for practical application of the filter can be given, so that the filter can have excellent durability. The tensile strength per basis weight herein is calculated according to the following equation.

$$\text{Tensile strength per basis weight } ((N/5 \text{ cm})/(g/m^2)) = \text{tensile strength } (N/5$$

$$\text{cm}) / \text{basis weight } (g/m^2)$$

As described above, in cases where the spunbond non-woven fabric for a filter of the present invention has the above-described particular basis weight, single fiber fineness for the surface and back layers, apparent density, air permeability, and bending resistance, a spunbond non-woven fabric for a filter suitable and useful as a filter can be obtained by achievement of a low pressure drop and an excellent dust brush-off performance, as well as a long product life that has not been achieved by conventional techniques.

The method of producing a spunbond non-woven fabric for a filter of the present invention is described below. The spunbond non-woven fabric for a filter of the present invention is produced by sequentially carrying out the following steps (a) to (d):

(a) a step of spinning, from a spinneret, a composite polyester fiber containing a low melting point polyester arranged in the vicinity of a high melting point polyester, the low melting point polyester having a melting point which is 10 to 140°C lower than the melting point of the high melting point polyester;

(b) a step of subjecting the spun composite polyester fiber to stretch by suction flow with high-speed suction gas, and then capturing the fiber on a moving net conveyor, to obtain a fiber web containing a composite polyester fiber having a single fiber fineness of not less than 1 dtex and less than 3 dtex at the surface layer and a single fiber fineness of not less than 3 dtex and not more than 5 dtex at the back layer;

(c) a step of passing hot air through the obtained fiber web, the hot air having a temperature higher than the melting point of the low melting point polyester and lower than the melting point of the high melting point polyester, to perform air-through thermal bonding; and

(d) a step of sandwiching the air-through-thermal-bonded fiber web between a pair of flat rolls or two belt conveyors, and performing heat treatment at a temperature which is 5 to 75°C lower than the melting point of the low melting point polyester, to obtain a spunbond non-woven fabric having a basis weight of 130 to 300 g/m$^2$.

The spunbond non-woven fabric for a filter of the present invention is obtained by the so-called spunbond method. It is prepared by application of a process in which a fiber web collected by the spunbond method is subjected to the air-through method to melt the low melting point polyester, thereby allowing adhesion of the fibers to each other, followed by further carrying out heat treatment to increase the compactness.

A method of treating the fiber web captured on the net conveyor by temporal adhering is also a preferred mode of the method of producing a spunbond non-woven fabric for a filter of the present invention. The temporal adhering is preferably carried out by a method in which the captured fiber web is heat-pressed using a pair of flat rolls, or a method in which a flat roll is arranged on a net conveyor, and the captured fiber web is heat-pressed between the net conveyor and the flat roll. The temperature for the heat press for temporal adhering is preferably 70 to 120°C lower than the melting point of the low melting point polyester. By setting the temperature to such a value, excessive adhesion of fibers to each other can be prevented, and the conveying performance can be improved.

In the method of obtaining a fiber web in the present invention, it is preferred that a fiber web having a single fiber fineness of not less than 1 dtex and less than 3 dtex is captured on a net conveyor, and a fiber web having a single fiber fineness of not less than 3 dtex and not more than 5 dtex is captured and thus stacked thereon. A fiber web having a single fiber fineness of not less than 3 dtex and not more than 5 dtex may be captured on a net conveyor, and a fiber web having a single fiber fineness of not less than 1 dtex and less than 3 dtex may be captured and thus stacked thereon. Furthermore, a fiber web can be also obtained by stacking a sheet to which a fiber web having a single fiber fineness of not less than 1 dtex and less than 3 dtex is adhered temporarily and a sheet to which a fiber web having a single fiber fineness of not less than 3 dtex and not more than 5 dtex is adhered temporarily.

In the integration process by the thermal bonding in the present invention, application of an embossing roll is preferably avoided. In cases where the thermal bonding is carried out using an embossing roll, fibers in the thermally bonded portion are melted to become film-like, leading to elimination of air permeability as well as a low capture performance. Moreover, regarding the dust brush-off performance, accumulation of dust occurs in the thermally bonded portion having no air permeability, leading to a short product life, which is problematic.

The air-through method in the present invention is a method in which hot air is passed through the fiber web obtained by the spunbond method. In this process, it is important for the hot air to have a temperature higher than the melting point of the low melting point polyester, and lower than the melting point of the high melting point polyester. The range of the hot-air temperature is preferably from the melting point of the low melting point polyester + 5°C to the melting point of the high melting point polyester - 5°C. On the other hand, in cases where the hot-air temperature is lower than the temperature of the low melting point polyester, the fibers cannot be easily fused with each other, resulting in a poor mechanical strength. In cases where the hot-air temperature is higher than the temperature of the high melting point polyester, all fibers constituting the spunbond non-woven fabric are melted to form a film-like sheet, which has poor air permeability and is difficult to use as a pleated filter.

In the present invention, it is important to further increase the compactness of the fibers thermally bonded by the air-through method. A fiber web obtained by the air-through method has a bulky, low-density structure. Therefore, in cases where it is used as a pleated filter, its high air permeability allows entrance of dust into the inside, so that the dust cannot be brushed off by compressed air, resulting in a short product life, which is problematic. In the present invention, the surface of the fiber sheet has especially higher compactness, so that filtration through the surface layer of the fiber web is possible while maintaining the air permeability, which is characteristic to the air-through method, thereby improving the brush-off performance.

The air-through thermal bonding in the present invention is preferably carried out in a state where the entire surface of the fiber web is held. By this, shrinkage of the fiber web, formation of wrinkles, and deterioration of the appearance quality can be prevented in the thermal bonding process. The method for holding the entire surface of the fiber web is preferably a method in which the fiber web is passed through a pair of upper and lower conveyor nets to bring the conveyor nets into contact with both sides of the fiber web, and a method in which the fiber web is brought into contact with an air-through drum in a state where tension is applied, to enable holding by friction with the drum.

Examples of the method for increasing the compactness include a method in which compactness of fibers on the surface of the fiber web is increased by thermal bonding using a pair of flat rolls, and a method in which the fiber sheet is sandwiched between two belt conveyors composed of resin belts, and then heat treatment is carried out. The method in which the fiber web is sandwiched between belt conveyors, and then heat treatment is carried out, is especially preferred since the heat treatment can be carried out for a relatively long time without positively applying pressure, so that the compactness can be increased specifically for the surface of the fiber web.

In the present invention, in cases where heat treatment is performed using a pair of flat rolls or two belt conveyors, it is important that the temperature is 5 to 75°C lower than the melting point of the low melting point polyester present in the fiber surface of the spunbond non-woven fabric. The temperature is preferably 10 to 70°C lower, more preferably 20 to 60°C lower than the melting point. In cases where the temperature of heat treatment by a pair of flat rolls or two belt conveyors is not lower than the melting point of the low melting point polyester present in the fiber surface of the spunbond non-woven fabric by not less than 5°C, excessive thermal bonding occurs, resulting in a density lower than the lower limit of the particular range defined in the present invention. In cases where the temperature of heat treatment by a pair of flat rolls or two belt conveyors is lower than the melting point of the low melting point polyester present in the fiber surface of the spunbond non-woven fabric by not less than 75°C, thermal bonding is too weak and the surface has insufficient compactness, resulting in a density higher than the upper limit of the particular range defined in the present invention.

The spunbond non-woven fabric for a filter of the present invention preferably has an operation time of 1,000 to 5,000 hours, more preferably 1,500 to 4,000 hours, and still more preferably 2,000 to 3,500 hours in the dust brush-off test. The dust brush-off test is carried out by the following method or a measurement method that can provide the equivalent result. That is, from arbitrary portions of the non-woven fabric, three samples each having a size of 15 cm × 15 cm were collected. Each test apparatus had a constitution, as shown in Fig. 1, containing: a dust supply device 5 connected upstream of a sample holder 1 in which a test sample M is to be placed; and a flowmeter 2, flow control valve 3, blower 4, and pulse-jet device 6, connected downstream of the sample holder 1. The evaluation area of the test sample was 0.01 m$^2$. A pressure gauge 7 was connected to the sample holder 1 to enable measurement of the pressure drop of the test sample M. In the test for the brush-off performance, the JIS type-15 standard powder was fed from the dust supply device 5 to a concentration of 20 g/m$^3$. The dust was then continuously supplied at the constant concentration while adjusting the air flow using the flow control valve 3 such that the filter passing rate was 1.5 m/minute. When the pressure drop of the test sample M reached 1,500 Pa, 0.5-MPa compressed air was injected from the pulse-jet device 6 for 0.1 sec. to brush off the dust attached to the test sample M. The operation time (hrs) required for the number of times of the dust brush-off to reach 200 times was measured for each sample, and the average value was calculated from the results of three replicates of the test, followed by rounding the calculated average value to the nearest 10, which was determined as the operation time (hrs).

EXAMPLES

The spunbond non-woven fabric for a filter of the present invention and its production method are described below concretely by way of showing Examples. The property values in the Examples described below were measured by the following methods.

(1) Melting Point of Polyester (°C)

Using a differential scanning calorimeter DSC-2 manufactured by Perkin-Elmer Corp., measurement was carried out at a heating rate of 20°C/minute, and the temperature at which the extreme value was observed in the resulting melting endothermic curve was determined as the melting point of the polyester. In cases where a resin exhibited no extreme value in the melting endothermic curve obtained by the differential scanning calorimeter, the resin was heated on a hot plate, and the temperature at which melting of the resin was found by observation under the microscope was determined as the melting point.

(2) Intrinsic Viscosity IV of Polyester

The intrinsic viscosity of the polyester was measured by the following method.
In 100 mL of ortho-chlorophenol, 8 g of a sample was dissolved, and its relative viscosity $\eta_r$ was determined according to the following equation using an Ostwald viscometer at a temperature of 25°C.

$$\eta_r = \eta/\eta_0 = (t \times d) / (t_0 \times d_0)$$

(wherein $\eta$ represents the viscosity of the polymer solution; $\eta_0$ represents the viscosity of ortho-chlorophenol; t represents the dropping time (seconds) of the solution; d represents the density of the solution ($g/cm^3$); to represents the dropping time (seconds) of ortho-chlorophenol; and do represents the density of ortho-chlorophenol ($g/cm^3$).)

Subsequently, the intrinsic viscosity IV was calculated according to the following equation based on the relative viscosity $\eta_r$.

$$IV = 0.0242\eta_r + 0.2634.$$

(3) Single Fiber Fineness (Decitex)

Ten small sample pieces were randomly collected from the spunbond non-woven fabric, and their images were taken using a scanning electron microscope at magnification selected from the range of $\times 500$ to $\times 3,000$. Ten fibers from each small sample piece, that is, a total of 100 fibers, were arbitrarily selected, and the thickness of each fiber was measured. Each fiber was regarded as having a circular cross-section, and its thickness was defined as the fiber diameter. The average value was rounded to the nearest integer, and then the single fiber fineness was calculated based on the calculated fiber diameter and the polymer density, followed by rounding the calculated value to the nearest integer.

(4) Basis Weight of Non-woven Fabric ($g/m^2$)

Three samples each having a size of 50 cm $\times$ 50 cm were collected, and the mass of each sample was measured, followed by converting the average of the obtained values to a value per unit area and rounding the resulting value to the nearest integer.

(5) Thickness of Non-woven Fabric (mm)

Using a thickness gauge (manufactured by TECLOCK Corporation; "TECLOCK" (registered trademark) SM-114), the thickness of the non-woven fabric was measured at 10 points positioned at equal intervals along the width direction. The resulting average value was rounded to two decimal places to determine the thickness.

(6) Apparent Density of Non-woven Fabric ($g/cm^3$)

Using the thickness obtained as described above in section (5) and the basis weight obtained as described above in section (4), the apparent density was calculated according to the following equation, and the resulting value was rounded to two decimal places.

$$\text{Apparent density } (g/cm^3) = \text{basis weight } (g/m^2) / \text{thickness (mm)} / 1,000$$

(7) Air Permeability of Non-woven Fabric ($cm^3/cm^2 \cdot sec$)

From arbitrary portions of the spunbond non-woven fabric, 10 samples each having a size of 10 cm $\times$ 10 cm were collected, and the samples were measured by the Frazier method according to JIS L 1913 (2010). The pressure set for the measurement was 125 Pa. The air permeability was calculated by averaging the values obtained at the 10 points and rounding the resulting average to the nearest integer.

(8) Air Permeability of Non-woven Fabric per Basis Weight (($cm^3/cm^2 \cdot sec$)/($g/m^2$))

The air permeability value obtained above as the air permeability in section (7) was divided by the basis weight value obtained above as the basis weight in section (4), and the resulting value was rounded to three decimal places to calculate the air permeability per basis weight.

(9) Bending Resistance of Non-woven Fabric (mN)

The bending resistance was measured and calculated according to the Gurley method described in section 6.7.4 of JIS L 1913 (2010).

(10) Bending Resistance of Non-woven Fabric per Basis Weight ((mN)/(g/m$^2$))

The bending resistance value obtained above as the bending resistance in section (9) was divided by the basis weight value obtained above as the basis weight in section (4), and the resulting value was rounded to three decimal places to calculate the bending resistance per basis weight.

(11) Tensile Strength of Non-woven Fabric (N/5 cm)

The tensile strength of the non-woven fabric was measured according to section 6.3.1 of JIS L 1913 (2010). Test pieces each having a size of 5 cm × 30 cm whose long side corresponded to the machine direction (MD) or the transverse direction (TD) were collected from three points per 1 m positioned at equal intervals along the width direction, and tensile tests were carried out at a grip distance of 20 cm and a tensile rate of 10 cm/minute using a constant speed elongation type tensile testing machine. The strength at break was read, and rounded to the nearest integer to determine the tensile strength (N/5 cm).

(12) Tensile Strength of Non-woven Fabric per Basis Weight ((mN)/(g/m$^2$))

The tensile strength value obtained above as the tensile strength in section (11) was divided by the basis weight value obtained above as the basis weight in section (4), and the resulting value was rounded to one decimal place to calculate the tensile strength per basis weight for each of the machine direction (MD) and the transverse direction (TD).

(13) Dust Brush-off Test of Non-woven Fabric

From arbitrary portions of the non-woven fabric, three samples each having a size of 15 cm × 15 cm were collected. Each test apparatus had a constitution, as shown in Fig. 1, containing: a dust supply device 5 connected upstream of a sample holder 1 in which a test sample M is to be placed; and a flowmeter 2, flow control valve 3, blower 4, and pulse-jet device 6, connected downstream of the sample holder 1. The evaluation area of the test sample was 0.01 m$^2$. A pressure gauge 7 was connected to the sample holder 1 to enable measurement of the pressure drop of the test sample M. In the test for the brush-off performance, the JIS type-15 standard powder was fed from the dust supply device 5 to a concentration of 20 g/m$^3$. The dust was then continuously supplied at the constant concentration while adjusting the air flow using the flow control valve 3 such that the filter passing rate was 1.5 m/minute. When the pressure drop of the test sample M reached 1,500 Pa, 0.5-MPa compressed air was injected from the pulse-jet device 6 for 0.1 sec. to brush off the dust attached to the test sample M. The operation time (hrs) required for the number of times of the dust brush-off to reach 200 times was measured for each sample, and the average value was calculated from the results of three replicates of the test, followed by rounding the calculated average value to the nearest 10 to determine the operation time (hrs).

(14) Dust Collection Performance Test of Non-woven Fabric

From arbitrary portions of the non-woven fabric, three test samples each having a size of 15 cm × 15 cm were collected, and a dust collection performance test was carried out using VDI/DIN 3926 as a reference standard. The filtration area of each test sample was 0.016 m$^2$, and the filtration air velocity was set to 2.0 m/minute. As the dust powder, aluminum oxide particles (Dp50: 10.5 μm) were used. The particles were supplied at a constant concentration such that the dust concentration in the upstream of the test sample was 5 g/m$^3$.

First, the aging cycle in which 0.5 MPa compressed air was injected from the pulse-jet device for 1 second was carried out 5,000 times at 5-second intervals. Subsequently, for post-aging evaluation of the performance, the brush-off cycle in which 0.5 MPa compressed air was injected for 1 second after the pressure drop reached 1,000 Pa (wherein in cases where the pressure drop reached 1,000 Pa in less than 5 seconds after the previous brush-off, the dust was loaded until 5 seconds after the previous brush-off, and then the injection of the compressed air was carried out) was repeated 30 times. From the powder leakage concentration during the test, the dust collection rate was calculated according to the following equation. The measurement was carried out in three replicates, and the average was rounded to three decimal places.

$$\text{Dust collection rate (\%)} = (1 - \text{powder leakage concentration (g/m}^3\text{) / upstream dust}$$

$$\text{concentration (g/m}^3\text{))} \times 100$$

The pressure drop was measured 5 seconds after the injection of pulse-jet in the 30th brush-off cycle. The measurement was carried out in three replicates, and the average was rounded to the nearest integer.

(15) Partially Observed Concave Region in Non-woven Fabric

Five small sample pieces each having a size of 10 mm × 10 mm were randomly collected from the spunbond non-woven fabric, and each small sample piece was subjected to 3D shape measurement for not less than 4.5 mm along the width direction × not less than 4.5 mm along the longitudinal direction using a one-shot 3D shape measuring instrument VR-3000 manufactured by Keyence Corporation. Subsequently, each side of each small sample piece was surveyed to see, using as a reference point (0 mm depth) the highest portion in the side, the presence/absence of a region having a depth of not less than 0.1 mm that continues for a length of not less than 0.2 mm in the surface direction along a straight line of 4.5 mm in the width direction or 4.5 mm in the longitudinal direction that passes through the reference point (that is, a partially observed concave region having a depth of not less than 0.1 mm). In Table 1, in cases where none of the small sample pieces had such a partially observed concave region having a depth of not less than 0.1 mm, the result was described as "Absent"; in cases where at least one small sample piece had a partially observed concave region having a depth of not less than 0.1 mm on only one side, the result was described as "Present on one side"; and in cases where at least one small sample piece had partially observed concave regions having a depth of not less than 0.1 mm on both sides, the result was described as "Present on both sides".

[Example 1]

A polyethylene terephthalate (PET) having an intrinsic viscosity IV of 0.65 and a melting point of 260°C dried to a moisture content of not more than 50 mass ppm and a copolymerized polyester (CO-PET) having an intrinsic viscosity IV of 0.64, an isophthalic acid copolymerization ratio of 11 mol%, and a melting point of 230°C dried to a moisture content of not more than 50 mass ppm were melted at temperatures of 295°C and 280°C, respectively. The polyethylene terephthalate as a core component and the copolymerized polyester as a sheath component were spun from the pore at a spinneret temperature of 295°C and a core:sheath mass ratio of 80:20, and then filaments having a circular cross-sectional shape were spun at a spinning rate of 4,300 m/minute using an air sucker. A fiber web having a single fiber fineness of 2.1 decitex (dtex) were captured on a moving net conveyor, and a fiber web having a single fiber fineness of 3.4 decitex (dtex) were captured thereon. Air at a hot-air temperature of 250°C was passed through the captured fiber webs, and thermal bonding was performed using a calender roll composed of a pair of flat rolls at a temperature of 180°C at a line pressure of 50 kg/cm, to obtain a spunbond non-woven fabric having a basis weight of 200 g/m$^2$ composed of fibers having a single fiber fineness of 2.1 decitex (dtex) at the surface layer and fibers having a single fiber fineness of 3.4 decitex (dtex) at the back layer. The spunbond non-woven fabric obtained had a machine direction tensile strength per basis weight of 4.3 (N/5 cm)/(g/m$^2$) and a transverse direction tensile strength per basis weight of 3.0 (N/5 cm)/(g/m$^2$). The results are shown in Table 1.

[Example 2]

A spunbond non-woven fabric having a basis weight of 260 g/m$^2$ composed of fibers having a single fiber fineness of 2.1 decitex (dtex) at the surface layer and fibers having a single fiber fineness of 3.4 decitex (dtex) at the back layer was obtained under the same conditions as in Example 1 except that the basis weight was changed to 260 g/m$^2$ by controlling the speed of the net conveyor. The results are shown in Table 1.

[Example 3]

A polyethylene terephthalate (PET) having an intrinsic viscosity IV of 0.65 and a melting point of 260°C dried to a moisture content of not more than 50 mass ppm and a copolymerized polyester (CO-PET) having an intrinsic viscosity IV of 0.64, an isophthalic acid copolymerization ratio of 11 mol%, and a melting point of 230°C dried to a moisture content of not more than 50 mass ppm were melted at temperatures of 295°C and 280°C, respectively. The polyethylene terephthalate as a core component and the copolymerized polyester as a sheath component were spun from the pore at a spinneret temperature of 295°C and a core:sheath mass ratio of 80:20, and then filaments having a circular cross-sectional shape were spun at a spinning rate of 4,300 m/minute using an air sucker. A fiber web having a single fiber fineness of 2.1 decitex (dtex) were captured on a moving net conveyor, and then a fiber web having a single fiber fineness of 3.4 decitex (dtex) were captured thereon. After passing air at a hot-air temperature of 250°C through the fiber sheet, the captured fiber webs were sandwiched between two belt conveyor composed of resin belts, and heat treatment was carried out at a temperature of 170°C, to obtain a spunbond non-woven fabric having a basis weight of 200 g/m$^2$ composed of fibers having a single fiber fineness of 2.1 decitex (dtex) at the surface layer and fibers having a single fiber fineness of 3.4 decitex (dtex) at the back layer. The spunbond non-woven fabric obtained had a machine direction tensile strength per basis weight of 4.0 (N/5 cm)/(g/m$^2$) and a transverse direction tensile strength per basis weight of 2.7 (N/5 cm)/(g/m$^2$). The results are shown in Table 1.

[Example 4]

A spunbond non-woven fabric having a basis weight of 150 g/m$^2$ composed of fibers having a single fiber fineness of 2.1 decitex (dtex) at the surface layer and fibers having a single fiber fineness of 3.4 decitex (dtex) at the back layer was obtained under the same conditions as in Example 3 except that the basis weight was changed to 150 g/m$^2$ by controlling the speed of the net conveyor. The results are shown in Table 1.

[Example 5]

A spunbond non-woven fabric having a basis weight of 200 g/m$^2$ composed of fibers having a single fiber fineness of 1.5 decitex (dtex) at the surface layer and fibers having a single fiber fineness of 4.0 decitex (dtex) at the back layer was obtained by capturing a fiber web having a single fiber fineness of 1.5 decitex (dtex) on a moving net conveyor and then capturing a fiber web having a single fiber fineness of 4.0 decitex (dtex) thereon, under the same conditions as in Example 3 except that the single fiber fineness was changed by controlling the discharge rate. The results are shown in Table 1.

The properties of the obtained non-woven fabrics were as shown in Table 1. All of the spunbond non-woven fabrics of Examples 1, 2, 3, 4, and 35 had excellent air permeabilities and rigidities. Although the filters after the dust brush-off test had dust attached to their surfaces, they were in good conditions without occurrence of clogging or the like. The results are shown in Table 1.

[Table 1]

| | | Example 1 | Example 2 | Example 3 | Example 4 | Example 5 |
|---|---|---|---|---|---|---|
| Single fiber fineness (dtex) Surface layer portion/ Back layer portion | | 2.1/3.4 | 21/3.4 | 2.1/3.4 | 21/3.4 | 1.5/4.0 |
| Basis Weight (g/m$^2$) | | 200 | 260 | 200 | 150 | 200 |
| Apparent density (g/cm$^3$) | | 0.34 | 0.37 | 0.35 | 0.31 | 0.35 |
| Partially observed concave region having a depth of not less than 0.10 mm | | absent | absent | absent | absent | absent |
| Permeability per basis weight (cm$^3$/cm$^2$·sec)/(g/m$^2$) | | 0.19 | 0.08 | 0.19 | 0.34 | 0.17 |
| Bending Resistance per basis weight (mN)/ (g/m$^2$) | Longitudinal direction | 0.17 | 0.31 | 0.15 | 0.10 | 0.14 |
| | Traverse direction | 0.13 | 0.24 | 0.12 | 0.08 | 0.12 |
| Dust brush-off property (hr) | | 2,494 | 2,592 | 2,624 | 2,345 | 2,892 |
| Dust collection rate (%) | | 99.921 | 99.968 | 99.915 | 99.798 | 99.981 |
| Pressure drop (Pa) | | 435 | 903 | 380 | 290 | 453 |

[Comparative Example 1]

A spunbond non-woven fabric having a basis weight of 200 g/m$^2$ was obtained under the same conditions as in Example 1 except that the single fiber fineness was changed to 2.7 decitex. The spunbond non-woven fabric obtained had a machine direction tensile strength per basis weight of 4.4 (N/5 cm)/(g/m$^2$) and a transverse direction tensile strength per basis weight of 3.1 (N/5 cm)/(g/m$^2$). The results are shown in Table 2.

[Comparative Example 2]

A spunbond non-woven fabric having a basis weight of 260 g/m$^2$ composed of fibers having a single fiber fineness of 2.7 decitex was obtained under the same conditions as in Example 1 except that the basis weight was changed to 260 g/m$^2$ by controlling the speed of the net conveyor. The results are shown in Table 2.

[Comparative Example 3]

A spunbond non-woven fabric having a basis weight of 200 g/m$^2$ composed of fibers having a single fiber fineness of 2.7 decitex was obtained under the same conditions as in Example 1 except that air at a hot-air temperature of 250°C was passed through the fiber sheet, which was then sandwiched between two belt conveyor composed of resin belts, and heat treatment was carried out at a temperature of 170°C. The results are shown in Table 2.

[Comparative Example 4]

A polyethylene terephthalate (PET) having an intrinsic viscosity IV of 0.65 and a melting point of 260°C dried to a moisture content of not more than 50 mass ppm and a copolymerized polyester (CO-PET) having an intrinsic viscosity IV of 0.64, an isophthalic acid copolymerization ratio of 11 mol%, and a melting point of 230°C dried to a moisture content of not more than 50 mass ppm were melted at temperatures of 295°C and 280°C, respectively. The polyethylene terephthalate as a core component and the copolymerized polyester as a sheath component were spun from the pore at a spinneret temperature of 295°C and a core:sheath mass ratio of 80:20, followed by thermal bonding using an embossing roll having a press area ratio of 18% at a temperature of 200°C at a line pressure of 60 kg/cm, to obtain a spunbond non-woven fabric having a basis weight of 200 g/m$^2$ composed of fibers having a single fiber fineness of 2.7 decitex. The results are shown in Table 2.

[Comparative Example 5]

A spunbond non-woven fabric having a basis weight of 200 g/m$^2$ was obtained by thermal bonding under same conditions as in Comparative Example 4, that is, using an embossing roll having a press area ratio of 18% at a temperature of 200°C at a line pressure of 60 kg/cm, except that a fiber web having a single fiber fineness of 2.1 decitex (dtex) was captured on a moving net conveyor and then a fiber web having a single fiber fineness of 3.4 decitex (dtex) was captured thereon to obtain fibers having a single fiber fineness of 2.1 decitex (dtex) at the surface layer and a single fiber fineness of 3.4 decitex (dtex) at the back layer. The results are shown in Table 2.

[Comparative Example 6]

A spunbond non-woven fabric having a basis weight of 260 g/m$^2$ composed of fibers having a single fiber fineness of 2.1 decitex (dtex) at the surface layer and fibers having a single fiber fineness of 3.4 decitex (dtex) at the back layer was obtained under the same conditions as in Comparative Example 5 except that the basis weight was changed to 260 g/m$^2$ by controlling the speed of the net conveyor, and thermal bonding was carried out using an embossing roll with a press area ratio of 10%. The results are shown in Table 2.

[Comparative Example 7]

A spunbond non-woven fabric having a basis weight of 150 g/m$^2$ composed of fibers having a single fiber fineness of 2.7 decitex was obtained under the same conditions as in Example 3 except that the basis weight was changed to 150 g/m$^2$ by controlling the speed of the net conveyor. The results are shown in Table 2.

[Comparative Example 8]

A spunbond non-woven fabric having a basis weight of 200 g/m$^2$ composed of fibers having a single fiber fineness of 1.0 decitex (dtex) at the surface layer and fibers having a single fiber fineness of 4.0 decitex (dtex) at the back layer was obtained by capturing a fiber web having a single fiber fineness of 0.8 decitex (dtex) on a moving net conveyor and then capturing a fiber web having a single fiber fineness of 4.5 decitex (dtex) thereon, under the same conditions as in Example 3 except that the single fiber fineness was changed by controlling the discharge rate. The results are shown in Table 2.

[Comparative Example 9]

A spunbond non-woven fabric having a basis weight of 200 g/m$^2$ composed of fibers having a single fiber fineness of 2.1 decitex (dtex) at the surface layer and fibers having a single fiber fineness of 6.0 decitex (dtex) at the back layer was obtained by capturing a fiber web having a single fiber fineness of 2.1 decitex (dtex) on a moving net conveyor and then capturing a fiber web having a single fiber fineness of 6.0 decitex (dtex) thereon, under the same conditions as in Example 3 except that the single fiber fineness was changed by controlling the discharge rate. The results are shown in Table 2.

[Table 2]

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|
| Single fiber fineness (dtex) Surface layer portion/ Back layer portion[Note] | 2.7 | 2.7 | 2.7 | 2.7 | 2.1/3.4 | 2.1/3.4 | 2.7 | 0.8/4.5 | 2.1/6.0 |
| Basis Weight (g/m$^2$) | 200 | 260 | 200 | 200 | 200 | 260 | 150 | 200 | 200 |
| Apparent density (a/cm') | 0.34 | 0.38 | 0.34 | 0.37 | 0.38 | 0.35 | 0.31 | 0.33 | 0.31 |
| Partially observed concave region having a depth of not less than 0.10 mm | absent | absent | absent | present at the both laver | present at the both laver | present at the both laver | absent | absent | absent |
| Permeability per weight (cm$^3$/cm$^2$·sec)/(g/m$^2$) | 0.19 | 0.08 | 0.20 | 0.09 | 0.07 | 0.05 | 0.34 | 0.10 | 0.25 |
| Bending Resistance per basis weight (mN)/ (g/m$^2$) — Longitudinal direction | 0.18 | 0.32 | 0.15 | 0.07 | 0.07 | 0.11 | 0.10 | 0.12 | 0.09 |
| Bending Resistance per basis weight (mN)/ (g/m$^2$) — Traverse direction | 0.14 | 0.25 | 0.12 | 0.03 | 0.03 | 0.04 | 0.08 | 0.10 | 0.07 |
| Dust brush-off property (hr) | 2,102 | 2,203 | 2,230 | 1.732 | 1.720 | 1,830 | 1,950 | 1,850 | 1,980 |
| Dust collection rate (%) | 99.843 | 99.891 | 99.837 | 97.780 | 99.603 | 95.673 | 99.658 | 99.991 | 99.756 |
| Pressure drop (Pa) | 525 | 983 | 460 | 1550 | 1526 | 1490 | 350 | 1320 | 320 |

[Note] In case of single value, non-woven fabric has neither surface layer portion nor back layer portion.

The properties of the obtained non-woven fabrics were as shown in Table 1 and Table 2. In Comparative Examples 1, 2, 3 and 7, although the air permeability was similar, clogging with dust easily occurred due to insufficient compactness of the surface layer, and the dust brush-off performance was also inferior. In Comparative Example 4, because of the presence of the partially observed concave regions, the air permeability was low; the pressure drop was high; and the dust brush-off performance was poor. In Comparative Example 5, although the structure of the single fiber fineness was the same as in the present invention, because of the presence of partially observed concave regions, the air permeability was low; the pressure drop was high; and the dust brush-off performance was poor. In Comparative Example 6, although the press area ratio was 10%, the dust brush-off performance was also poor. In Comparative Example 8, the dust collection rate was good since the single fiber fineness of the surface layer was less than 1.5 dtex, but the air permeability was low and the pressure drop was high. In Comparative Example 9, the air permeability was high and the pressure drop was low since the single fiber fineness of the back layer was thicker than 5 dtex, but the dust brush-off performance was poor.

As a result of the dust collection performance test, the spunbond non-woven fabrics for a filter of the present invention were found to show lower pressure drops, better dust collection rates, and better dust brush-off performance compared to the spunbond non-woven fabrics of Comparative Examples 1, 2, 3, and 7.

DESCRIPTION OF SYMBOLS

1. Sample Holder
2. Flowmeter
3. Flow control valve
4. Blower
5. Dust supply device
6. Pulse-jet device
7. Pressure gauge
M. Measurement sample

INDUSTRIAL APPLICABILITY

Since the spunbond non-woven fabric for a filter of the present invention has high rigidity, air permeability, and dust brush-off performance, it can be suitably used as a pleated filter. Further, taking advantage of the excellent rigidity and air permeability, it can also be preferably used as a pleated filter base material to be laminated with a filter material such as a PTFE membrane or a nanofiber.

**Claims**

1. A spunbond non-woven fabric for a filter, comprising a composite polyester fiber containing a low melting point polyester arranged in the vicinity of a high melting point polyester, said low melting point polyester having a melting point which is 10 to 140°C lower than the melting point of said high melting point polyester, said spunbond non-woven fabric having a surface layer and a back layer, said composite polyester fiber having a single fiber fineness of not less than 1 dtex and less than 3 dtex at said surface layer and a single fiber fineness of not less than 3 dtex and not more than 5 dtex at said back layer, and said spunbond non-woven fabric having a basis weight of 130 to 300 g/m$^2$.

2. The spunbond non-woven fabric for a filter according to claim 1, wherein said composite polyester fiber has a composite form of a core-sheath type containing said high melting point polyester as a core component and said low melting point polyester as a sheath component, wherein the core-sheath component mass ratio between said core component and said sheath component is 90:10 to 60:40.

3. The spunbond non-woven fabric for a filter according to claim 1 or 2, wherein no partially observed concave region having a depth of not less than 0.1 mm is formed on at least one side.

4. The spunbond non-woven fabric for a filter according to any one of claims 1 to 3, wherein said high melting point polyester is a polyethylene terephthalate, and said low melting point polyester is a copolymerized polyethylene terephthalate.

5. A method of producing a spunbond non-woven fabric for a filter, comprising sequentially carrying out the following steps (a) to (d):

(a) a step of spinning, from a spinneret, a composite polyester fiber containing a low melting point polyester arranged in the vicinity of a high melting point polyester, said low melting point polyester having a melting point which is 10 to 140°C lower than the melting point of said high melting point polyester;
(b) a step of subjecting the spun composite polyester fiber to stretch by suction flow with high-speed suction gas, and then capturing the fiber on a moving net conveyor, to obtain a fiber web containing a composite polyester fiber having a single fiber fineness of not less than 1 dtex and less than 3 dtex at the surface layer and a single fiber fineness of not less than 3 dtex and not more than 5 dtex at the back layer;
(c) a step of passing hot air through the obtained fiber web, said hot air having a temperature higher than the melting point of said low melting point polyester and lower than the melting point of said high melting point polyester, to perform air-through thermal bonding; and
(d) a step of sandwiching the air-through-thermal-bonded fiber web between a pair of flat rolls or two belt conveyors, and performing heat treatment at a temperature which is 5 to 75°C lower than the melting point of said low melting point polyester, to obtain a spunbond non-woven fabric having a basis weight of 130 to 300 g/m².

6. The method of producing a spunbond non-woven fabric for a filter according to claim 5, wherein said composite polyester fiber has a composite form of a core-sheath type containing said high melting point polyester as a core component and said low melting point polyester as a sheath component, wherein the core-sheath component mass ratio between said core component and said sheath component is 90:10 to 60:40.

7. The method of producing a spunbond non-woven fabric for a filter according to claim 5 or 6, wherein said high melting point polyester is a polyethylene terephthalate, and said low melting point polyester is a copolymerized polyethylene terephthalate.

[Fig. 1]

## INTERNATIONAL SEARCH REPORT

| | International application No. |
|---|---|
| | PCT/JP2018/017617 |

| A. CLASSIFICATION OF SUBJECT MATTER |
|---|
| Int.Cl. B01D39/16(2006.01)i, D04H3/011(2012.01)i, D04H3/147(2012.01)i |

According to International Patent Classification (IPC) or to both national classification and IPC

| B. FIELDS SEARCHED |
|---|
| Minimum documentation searched (classification system followed by classification symbols) |
| Int.Cl. B01D39/00-39/20, D04H1/00-18/04, B01D46/00-46/54 |

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y<br>A | JP 2004-019061 A (TOYOBO BOSEKI KABUSHIKI KAISHA) 22 January 2004, claims, paragraphs [0011]-[0024], example 1 (Family: none) | 1-4<br>5-7 |
| Y<br>A | JP 2008-151980 A (MAHLE FILTER SYSTEMS LTD.) 03 July 2008, claims, paragraphs [0016], [0021] (Family: none) | 1-4<br>5-7 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 July 2018 (17.07.2018) | 31 July 2018 (31.07.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

<div align="center">**INTERNATIONAL SEARCH REPORT**</div>

| International application No. |
| --- |
| PCT/JP2018/017617 |

**C (Continuation). DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2006-150222 A (DAIWABO CO., LTD.) 15 June 2006, claims, paragraph [0016], examples 1-6 (Family: none) | 1-4<br>5-7 |
| A | JP 11-090135 A (CHISSO CORPORATION) 06 April 1999, claims, paragraph [0010], example 4 & EP 904819 A1, paragraph [0018], example 4, claims | 1-7 |
| A | JP 55-008858 A (TORAY INDUSTRIES, INC.) 22 January 1980 (Family: none) | 1-7 |
| A | JP 53-053076 A (MATSUSHITA ELECTRIC INDUSTRIAL CO., LTD.) 15 May 1978 (Family: none) | 1-7 |
| A | US 6090731 A (PIKE, Richard Daniel) 18 July 2000 & AU 3999795 A & BR 9509132 A & CA 2203567 A1 & CN 1171060 A & DE 69528076 T2 & EP 789612 A1 & ES 2181800 T3 & MX 9702931 A & PL 319975 A1 & US 5855784 A & WO 1996/013319 A1 | 1-7 |

Form PCT/ISA/210 (continuation of second sheet) (January 2015)

**REFERENCES CITED IN THE DESCRIPTION**

**Patent documents cited in the description**

- JP 3534043 B
- JP H7157960 A
- JP 2009006318 A
- JP H11192406 A
- JP H1190135 A